Europäisches Patentamt

European Patent Office

Office européen des brevets

(19)

(11) **EP 0 851 034 B1**

(12) **EUROPEAN PATENT SPECIFICATION**

(45) Date of publication and mention
of the grant of the patent:
**06.12.2000 Bulletin 2000/49**

(51) Int Cl.⁷: **C22B 3/08**, C22B 19/00

(21) Application number: **97115467.9**

(22) Date of filing: **05.09.1997**

(54) **Method for processing zinc silicate-containing zinc crude material**

Verfahren zur Behandlung zinksilikathaltiger Materialien

Procédé de traitement de matériaux contenant du zinc silicaté

(84) Designated Contracting States:
**BE DE ES FI FR NL**

(30) Priority: **27.12.1996 JP 34922996**
**16.06.1997 JP 15824597**

(43) Date of publication of application:
**01.07.1998 Bulletin 1998/27**

(73) Proprietor: **Mitsui Mining and Smelting Co., Ltd**
**Shinagawa-ku, Tokyo (JP)**

(72) Inventors:
• **Seiji, Ikenobu**
**Yoshiki-gun, Gifu-ken (JP)**

• **Kimihiro, Shimokawa**
**Yoshiki-gun, Gifu-ken (JP)**

(74) Representative: **Henkel, Feiler, Hänzel**
**Möhlstrasse 37**
**81675 München (DE)**

(56) References cited:
**US-A- 1 281 031**          **US-A- 2 874 041**
**US-A- 3 656 941**          **US-A- 3 954 937**
**US-A- 4 070 260**          **US-A- 4 148 862**
**US-A- 5 585 079**

**Description**

BACKGROUND OF THE INVENTION

1. Field of the Invention

The present invention relates to a method for processing a zinc silicate-containing zinc crude material in hydrometallurgical zinc refining, specifically to a method for processing a zinc silicate-containing zinc crude material, capable of rapidly depositing and precipitating eluted silica in a solid-liquid separable form in processing the zinc silicate-containing zinc crude material in a sulfuric acid acidic solution.

2. Description of the Related Art

A zinc silicate-containing zinc crude material includes willemite ($2ZnO \cdot SiO_2$), calamine ($2ZnO \cdot SiO_2 \cdot H_2O$), smithsonite ($ZnCO_3$), a mixture of these ores, calcine obtained by calcining concentrates of these ores and zinc-containing siliceous slags originating from the metallurgy of lead.

A sulfuric acid acidic solution is used in order to extract zinc from these zinc silicate-containing zinc crude materials.

In this case, both of the zinc and the soluble part of the silica are only dissolved in a sulfuric acid acidic solution, if the acidity of the above solution is as high as pH 3 or less.

Silica includes insoluble quartzose silica and soluble silica of a silicate type such as zinc silicate or the like. The former is insoluble in the solution in a leaching tank and has good precipitating property and filtration characteristic. Meanwhile, the latter soluble silica is eluted to be present in a super-saturation state and deposited after a certain time. However, it tends to be present in a gel form which makes the filtration slow, difficult or even impossible in industrial practice under a low pH condition and has a slow sedimentation velocity, which makes solid-liquid separation in a thickener at the following step difficult.

A part of impurities which are not eliminated by the solid-liquid separating operation described above is transferred to an electrolytic cell without being removed at a purification step which is an after-step in zinc hydrometallurgical process, and the concentration of the impurities contained in an electrolyte is increased to lower a current efficiency in electrolysis to a large extent.

Disclosed as prior arts for solving these problems are (1) hydrometallurgical treatment of siliceous zinc ores (U.S. Patent 3,656,941) and (2) process for the treatment of material containing zinc and silica for recovering of zinc by hydrometallurgic way (U.S. Patent 3,954,937 and Japanese Unexamined Patent Publication No. 50-44917).

The former technique comprises the first step for extracting zinc with a aqueous sulfuric acid having a pH of 1.5 to 2.5 and the second step for adjusting the pH of the extract to 4.9 to 5.3 with a neutralizing agent to coagulate silica particles. When a calcine is used as a neutralizing agent at the second step, the Zn recovery is reduced, and when $CaCO_3$ or $Ca(OH)_2$ is used, the cost is raised, and gypsum is formed, which increases the residue. Accordingly, problems are involved in this case in terms of practical uses.

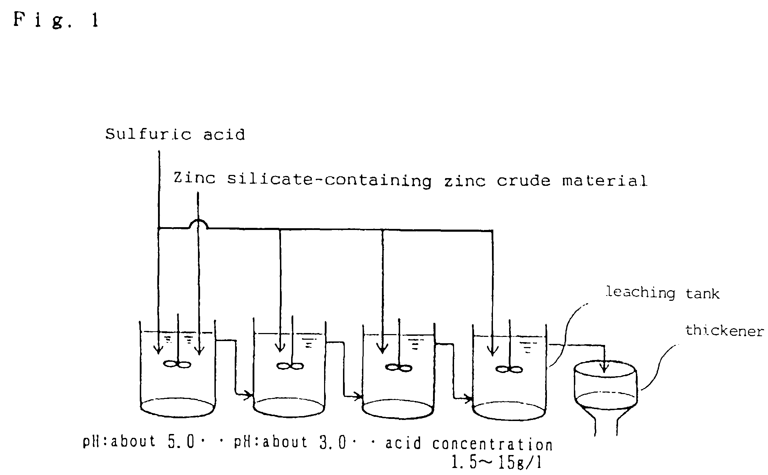

The latter technique is a method for processing a zinc silicate-containing zinc crude material with a diluted sulfuric acid aqueous solution as shown in Fig. 1, wherein processing is continued for as long time as, for example, 8 to 10 hours while maintaining the above solution at 70 to 90°C; during that time, sulfuric acid is added progressively to lower pH; and the final acid concentration is controlled to 1.5 to 15 g/liter, whereby zinc is extracted in the form of a soluble sulfate, and silica is deposited in a crystalline form having good precipitation rate and filtration rate.

However, when a zinc silicate-containing zinc crude material is continuously processed with this technique, sulfuric acid is added to lower pH from a high level on a graduated scale, that is, on a multistage scale, and therefore four or more leaching tanks and long crystal-growing time are required so that multistage processing can be carried out.

Further, there has been the problem that the concentration of a solid matter (pulp) contained in a leaching tank at the first stage becomes high, and therefore a high power stirrer or a lot of a diluting repulp solution for reducing a pulp concentration is required.

Accordingly, when applying the conventional technique described above, there has been the problem that the steps are complicated and the plant and equipment investment cost goes up very much.

As described above, in acid dissolution of a zinc silicate-containing zinc crude material, it has been difficult to carry out effectively both of (1) extraction of zinc from a zinc silicate-containing zinc material and (2) deposition and filtration of soluble silica at simple facilities .

Further, zinc ferrite ($ZnFe_2O_4$) contained in a calcine obtained by calcining a zinc-containing ore is dissolved only in the conditions of high temperatures and strong acid, and therefore it is not dissolved at an ordinary dissolving condition to become a leaching residue.

That is, in recovering Zn from a residue containing both $ZnFe_2O_4$ and silica in zinc hydrometallurgy, there has been required to develop, as described above, a processing method capable of precipitating silica in a solid-liquid separable form in the conditions of high temperatures and strong acid.

SUMMARY OF THE INVENTION

An object of the present invention is to solve the above problems of conventional techniques and provide a method for processing a zinc silicate-containing zinc crude material capable of quickly precipitating eluted silica in a solid-liquid separable form in a strong acid condition at simple facilities in dissolving the zinc silicate-containing zinc crude material in a leaching tank filled with a sulfuric acid-acidified solution to extract zinc.

The first invention relates to a method for processing a zinc silicate-containing zinc crude material, characterized by maintaining a sulfuric acid-acidified solution in the following conditions in extracting zinc from a zinc silicate-containing zinc crude material in a sulfuric acid-acidified leaching tank to obtain a solution having a good solid-liquid separation characteristic:

liquid temperature (t) : $t \geqq 75°C$

pH : $1.5 \leqq pH \leqq 3.0$

$SiO_2$ concentration, being concentration of ionic silica $[Si(OH)_4]$ and of colloidal silica $[(SiO_2)_n]$ in that solution : $SiO_2 \leqq 5.0$ g/$\ell$.

In the first invention described above, the pH of the sulfuric acid-acidified solution described above is maintained preferably at a constant value falling in a range of 1.5 or higher and 3.0 or lower. Further, only the single sulfuric acid-acidified leaching tank is preferably used, and the residence time of the zinc silicate-containing zinc crude material in the sulfuric acid-acidified leaching tank described above is preferably 3 hours or longer.

The second invention relates to a method for processing a zinc silicate-containing zinc crude material, characterized by feeding a composition containing silica into a sulfuric acid-acidified solution contained in a sulfuric acid-acidified leaching tank so that the amount of silica that is insoluble in acid contained in the above composition satisfies the following equation (1) in extracting zinc from the zinc silicate-containing zinc crude material in the leaching tank described above to obtain the solution having a good solid-liquid separation characteristic:

[amount of silica that is insoluble in acid contained in the composition containing silica fed into the

leaching tank]/[amount of soluble silica contained in the zinc silicate-

containing zinc crude material fed into the leaching tank] (weight ratio) $\geqq 0.3$     (1)

In the second invention described above, the composition containing silica is preferably a leaching residue produced at a hydrometallurgical zinc refining step.

The third invention relates to a method for processing a zinc silicate-containing zinc crude material, characterized by recirculating and feeding a leaching residue discharged out of a sulfuric acid-acidified leaching tank into a sulfuric acid-acidified solution contained in the leaching tank described above so that the amount of silica that is insoluble in acid contained in the leaching residue re-circulated and fed satisfies the following equation (2) in extracting zinc from the zinc silicate-containing zinc crude material in the leaching tank described above to obtain the solution having a good solid-liquid separation characteristic:

[amount of silica that is insoluble in acid contained in the leaching residue re-circulated and fed into

the leaching tank]/[amount of soluble silica contained in the zinc silicate-

containing zinc crude material fed into the leaching tank] (weight ratio) $\geqq 0.3$     (2)

In the second and third inventions described above, the pH of the solution contained in the leaching tank described above is controlled preferably to at most 3.0, and the concentration of sulfuric acid is controlled preferably to at most 100 g/l.

In the second and third inventions described above, the temperature of the solution contained in the leaching tank described above is controlled preferably to 60°C or higher.

Further, in the second and third inventions described above, the residence time of the zinc silicate-containing zinc crude material in the solution contained in the leaching tank described above is preferably 4 hours or longer.

In the first, second and third inventions described above, preferably used as the zinc silicate-containing zinc crude material is (I) zinc silicate-containing ore, (II) calcine containing silicate , (III) residue containing both $ZnFe_2O_4$ and silicate in a hydrometallurgical zinc refining or (IV) mixture thereof.

Also, in the second and third inventions described above, the leaching residue having an Si content of 10 wt % or more produced at the hydrometallurgical zinc refining step described above is preferably used as the leaching residue re-circulated and fed into the leaching tank.

Further, in the third invention described above, preferably used as the leaching residue re-circulated and fed into the leaching tank described above is at least a part of the leaching residue in the leaching tanks separated by a solid-liquid separating equipment such as a thickener, a centrifugal separator and a liquid cyclone for carrying out solid-liquid separation of a slurry discharged from the above leaching tank disposed as an after step for the leaching tank described above.

BRIEF DESCRIPTION OF THE DRAWINGS

Fig. 1 is a flow chart of an acidic leaching tank in a conventional technique.

Fig. 2 is a graph showing the relation of the solution temperatures of the sulfuric acid-acidified solution with the sedimentation velocity.

Fig. 3 is a graph showing the relation of the pH of the sulfuric acid-acidified solution with the sedimentation velocity.

Fig. 4 is a schematic diagram showing the relation of the pH of the sulfuric acid-acidified solution with the settling property, the filtration characteristic and the Zn extraction rate.

Fig. 5 is a graph showing the relation of the $SiO_2$ concentration of the sulfuric acid-acidified solution with the sedimentation velocity.

Fig. 6 is a graph showing the relation of the $SiO_2$ concentration of the sulfuric acid-acidified solution with time.

Fig. 7 is a flow chart showing one example of the hydrometallurgical treatment according to the present invention.

Fig. 8 is a graph showing the relation of the seed addition amount with the sedimentation velocity.

Fig. 9 is a graph showing the relation of the sulfuric acid concentration of the sulfuric acid-acidified solution with the sedimentation velocity.

Fig. 10 is a flow chart for explaining an experimental apparatus and an experimental method in a continuous process experiment with a serial continuous type leaching tank.

DESCRIPTION OF THE PREFERRED EMBODIMENTS

The present invention shall be explained below in further detail.

The present inventors have intensively continued researches and experiments in order to find out extraction conditions in which a solution containing a solid matter having good settling property and filtering property is obtained in extracting zinc from a zinc silicate-containing zinc crude material in a sulfuric acid-acidified leaching tank. As a result thereof, they have obtained the following new knowledges (1) and (2) and have come to complete the present invention based on the above knowledges.

(1) The three factors of the temperatures, the pH and the $SiO_2$ concentration of the sulfuric acid-acidified solution are maintained in the specific conditions. whereby not only the excellent Zn extraction rate can be achieved but also silica contained in the solution can be deposited and precipitated in a form having excellent settling property and filtration characteristic (first invention).

(2) A composition containing silica such as a leaching residue discharged out of a sulfuric acid-acidified leaching tank at a hydrometallurgical zinc refining step is fed into a sulfuric acid-acidified solution, whereby eluted silica can quickly be precipitated in a solid-liquid separable form in the same conditions as the acid concentration and the pH of a dissolving solution in a dissolving and extracting processing of zinc (second and third inventions).

The first invention (1) and the second and third inventions (2) shall he explained below in this order.

[First invention]

The first invention relates to a method for processing a zinc silicate-containing zinc crude material capable of carrying out effectively (1) extraction of zinc from the zinc silicate-containing zinc crude material and (2) both of deposition and filtration of soluble silica at simple facilities by controlling the three factors of the temperatures, the pH and the $SiO_2$ concentration of the sulfuric acid-acidified solution.

The content of batch tests which have resulted in achieving the present invention and the results obtained shall be explained below.

The zinc silicate-containing zinc material is added to the sulfuric acid-acidified solution which has been controlled in advance to a predetermined pH in the sulfuric acid-acidified leaching tank (capacity: 4 liter) to carry out zinc extraction processing for 4 hours while adding a spent electrolyte solution in order to maintain the pH of the sulfuric acid-acidified solution at a predetermined value, and the relation of the temperatures, the pH and the $SiO_2$ concentration of the sulfuric acid- acidified solution with the sedimentation velocity has been investigated by the following tests.

The $SiO_2$ concentration in the sulfuric acid-acidified solution which appears in those tests denotes the grand total of a $SiO_2$ concentration of ionic silica $[Si(OH)_4]$ in such solution and a $SiO_2$ concentration of colloidal silica $[(SiO_2)_n]$ in such solution. However, silica induced from insoluble silica present in particular quartz is not included in the total concentration noted here.

More specifically, the total concentration is referred to as the content of $SiO_2$ reduced from that of Si which is obtained through analysis of ICP (inductively coupled plasma atomic emission spectrometry) of a specimen solution that has been obtained by filtration with use of a filter paper of 5 class C (1 µm) stipulated by JIS, followed by dissolution of the filtrate in hydrofluoric acid.

(1) Relation of the temperatures of the sulfuric acid acidic solution with the sedimentation velocity:

A zinc silicate-containing zinc crude material containing $SiO_2$ of 6.8 wt % was added to the sulfuric acid-acidified solution which was controlled in advance to a pH of 2.2 so that the concentration of zinc crude material became 100 g/l, and the spent electrolyte discharged from electrolytic cells having a composition of Zn: 58 g/l, $H_2SO_4$: 198 g/l and $SiO_2$: 0.13 g/l was added to this sulfuric acid-acidified solution to maintain the pH at 2.2. On the other hand, the temperature of the sulfuric acid acidic solution was changed in a range of 60 to 95 °C to investigate an influence exerted to the sedimentation velocity by the temperature of the sulfuric acid-acidified solution.

The $SiO_2$ concentration in the sulfuric acid-acidified solution is less than 5.0 g/l in the conditions described above.

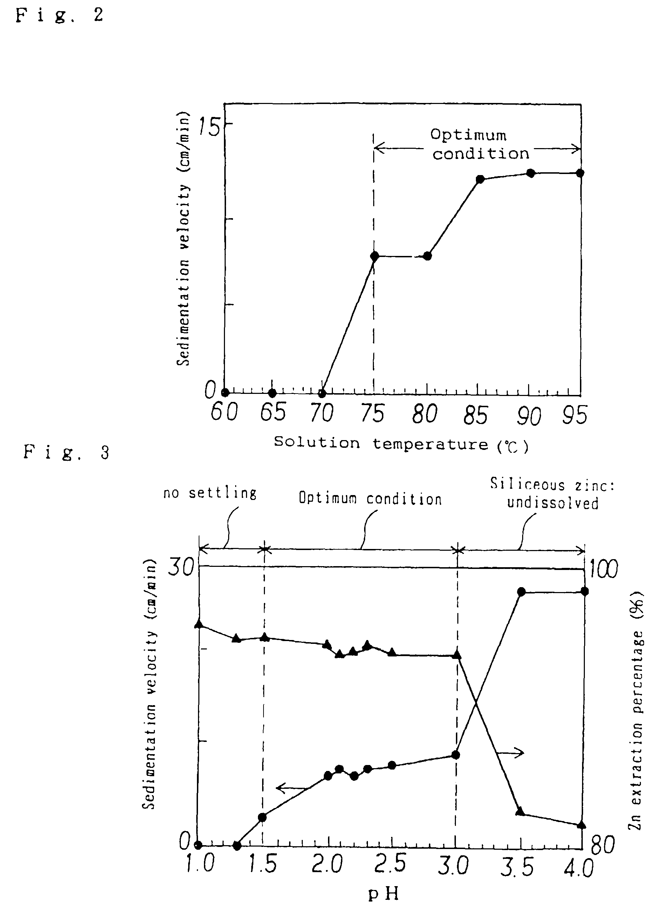

The relation of the temperature (hereinafter referred to as the solution temperature) of the sulfuric acid-acidified solution with the sedimentation velocity is shown in Fig. 2.

The sedimentation velocity is the absolute value of the gradient of ;i straight line obtained by plotting the height of a clear solution to time, wherein the suspension is decanted to measure the height of a clear solution slurry interface (supernatant liquid face) every one minute.

As apparent from Fig. 2, the sedimentation velocity of the solution is slow at the solution temperatures of lower than 75°C.

That is, the depositing speed of solubilized silica contained in the solution is slow at the solution temperatures of lower than 75°C. Further, the sedimentation velocity of silica deposited is slow as well, and the solid-liquid separating characteristic is inferior. Accordingly, the solution temperatures of the sulfuric acid-acidified solution for extraction have to he 75 °C or higher.

(2) Relation of the pH of the sulfuric acid-acidified solution with the sedimentation velocity and the Zn extraction rate:

The zinc silicate-containing zinc crude material containing $SiO_2$ of 6.8 wt % was added to the sulfuric acid-acidified solution which was controlled in advance to a pH of a predetermined constant value, and a spent electrolyte solution having a composition of Zn: 57 g/l. $H_2SO_4$: 195 g/l and $SiO_2$: 0.13 g/l was added to maintain the pH of the sulfuric acid-acidified solution at a predetermined constant value falling in a range of 1.0 to 4.0, whereby an influence exerted to the sedimentation velocity by the pH was investigated.

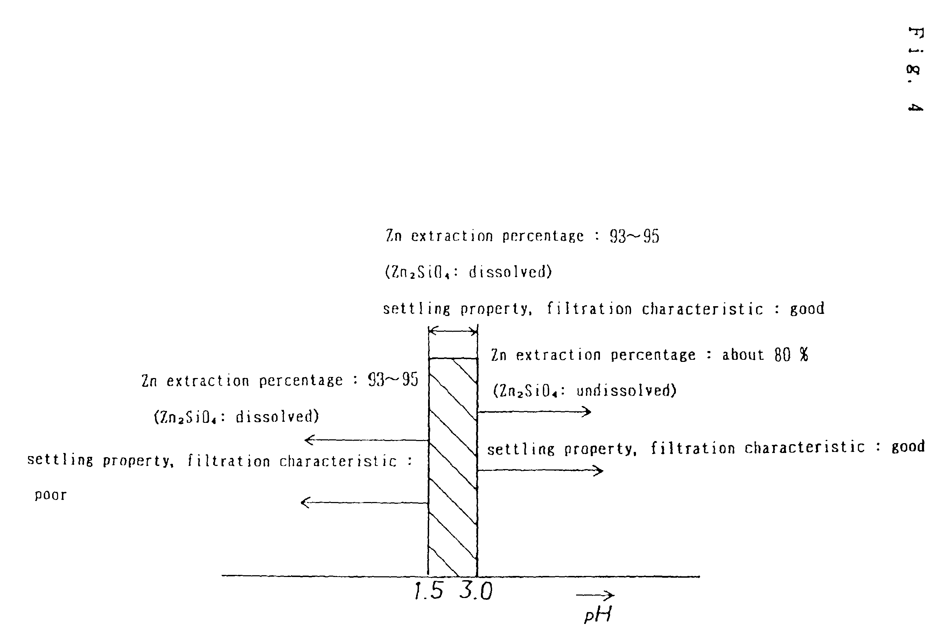

The relation of the pH of the sulfuric acid-acidified solution with the sedimentation velocity and the Zn extraction rate is shown in Fig. 3.

Further, the relation of the pH of the sulfuric acid-acidified solution with the settling property and the filtration characteristic of the solution and the Zn extraction percentage is schematically shown in Fig. 4.

As apparent from Fig. 3 and Fig. 4, when the pH is maintained at a predetermined value falling in a range of 1.5 or more and 3.0 or less, preferably 2.0 or more and 2.4 or less without fluctuating it, both of the sedimentation velocity and the Zn extraction percentage are good.

(3) Relation of the $SiO_2$ concentration in the sulfuric acid acidic solution with the sedimentation velocity:

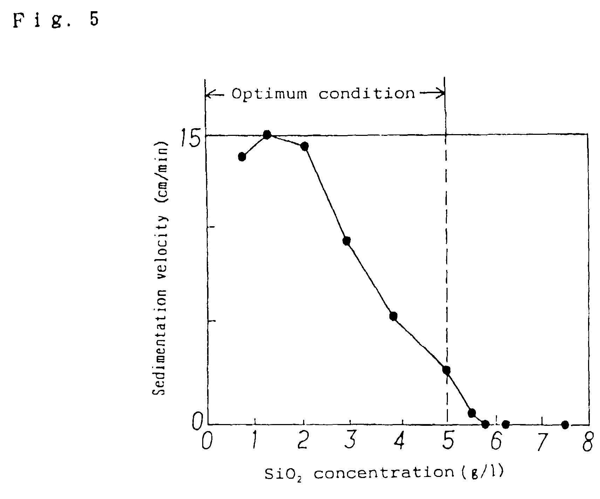

A zinc silicate-containing zinc crude material containing $SiO_2$ of 14.2 wt % was added to the sulfuric acid-acidified solution which was controlled in advance to a pH of 2.2 while changing the addition rate of zinc crude material in a range of 25 to 125 g/l so that the $SiO_2$ concentration became a predetermined value, whereby an influence exerted to the sedimentation velocity by the $SiO_2$ concentration in the sulfuric acid-acidified solution was investigated.
The relation of the $SiO_2$ concentration in the sulfuric acid-acidified solution with the sedimentation velocity is shown in Fig. 5.
As apparent from Fig. 5, the sedimentation velocity is good at the $SiO_2$ concentration of 5.0 g/l or less.

(4) Relation of the temperatures, the pH and the $SiO_2$ concentration of the sulfuric acid-acidified solution with the solid-liquid separation characteristic:

In the items (1) to (3) described above, influences exerted to the solid-liquid separation characteristic by the respective factors of the solution temperatures, the pH and the $SiO_2$ concentration were investigated.
The results obtained are shown all together in Table 1.
As a result of the experiments described above, it has been found that the deviation of any one factor of the temperatures, the pH and the $SiO_2$ concentration of the sulfuric acid-acidified solution from the optimum conditions cause deposited silica to be polymerized and gelatinized and deteriorates the solid-liquid separation characteristic, and therefore the three factors have to satisfy the optimum conditions at the same time.

Table 1

The reasons for limiting the values in the present invention shall be explained below in further detail.
First of all, the liquid temperature of the sulfuric acid-acidified solution has been controlled to 75°C or higher because the temperatures lower than this value retard the deposition speed of solubilized silica and therefore cause non-deposited solubilized silica to flow out to a thickener to increase the $SiO_2$ concentration in an effluent from the thickener.
Further, the liquid temperatures lower than 75°C degrade the solid-liquid separation characteristic even if in the condition of the low $SiO_2$ concentration.
Accordingly, the liquid temperature of the sulfuric acid-acidified solution has been controlled to 75°C or higher.
The liquid temperature of the sulfuric acid-acidified solution is more preferably 90°C or higher.
The pH of the sulfuric acid-acidified solution has been controlled to 1.5 or more and 3.0 or less because the pH exceeding 3.0 reduces the Zn extraction percentage due to non-dissolution of siliceous zinc and the pH less than 1.5 retards the deposition speed of solubilized silica and therefore increases the $SiO_2$ concentration in the effluent from the thickener.
Further, the pH lower than 1.5 degrades the solid-liquid separation characteristic even if in the condition of the low $SiO_2$ concentration.
Accordingly, the pH of the sulfuric acid-acidified solution has been controlled to 1.5 or more and 3.0 or less.
The pH of the sulfuric acid-acidified solution is more preferably 2.0 or more and 2.4 or less.
The $SiO_2$ concentration of the sulfuric acid-acidified solution has been controlled to 5.0 g/l or less because the $SiO_2$ concentration exceeding 5.0 g/l causes silica deposited to be polymerized and gelatinized even at the optimum conditions of the solution temperature and the pH and therefore deteriorates the solid-liquid separation characteristic.
The $SiO_2$ concentration of the sulfuric acid-acidified solution is more preferably 2.0 g/l or less.
The foregoing concentration of $SiO_2$ in the sulfuric acid-acidified solution may be adjusted as by supplying the crude material in controlled manner.
The three conditions described above have to be satisfied at the same time, and the solution containing solid matters having a good solid-liquid separation characteristic can be obtained by processing for 3 hours or longer.
Further, the processing of the zinc silicate-containing zinc crude material in the condition that the three conditions described above are satisfied makes it possible to extract the whole siliceous zinc only by processing at one stage (or single tank) and obtain the solution having a good solid-liquid separation characteristic.
That is, the present invention makes it possible to carry out processing while maintaining the pH at a fixed value without lowering the pH from a high level on a graduated scale as is the case with a technique described in Japanese Unexamined Patent Publication No. 50-44917, and therefore a lot of the leaching tanks for lowering the pH on a graduated scale has not necessarily had to be disposed.
Next, the second and third inventions shall be explained.

[Second and third inventions]

The second and third inventions relate to a method for processing the zinc silicate-containing zinc crude material, which has made it possible to extract effectively zinc from the zinc silicate-containing zinc crude material at simple facilities and obtain the solution having a good solid-liquid separation characteristic by feeding a composition containing silica such as a leaching residue discharged out of the sulfuric acid-acidified leaching tank at the hydrometallurgical zinc refining step into the sulfuric acid-acidified solution contained in the leaching tank.

The precipitating speed v of particles is shown by the Stokes equation represented by the following equation (3):

$$v = (\rho_P - \rho) \cdot g \cdot D_P^2 / 18\mu \tag{3}$$

wherein v represents a precipitating velocity; $\rho_P$ represents the density of a solid particle; $\rho$ represents the density of a liquid; g represents a gravitational acceleration; $D_P$ represents the particle diameter of the solid particle; and $\mu$ represents a viscosity coefficient.

The following factors [1] and [2] were assumed by the present inventors as reasons for the deterioration of the settling property in processing the zinc silicate-containing zinc crude material:

[1] increase in the viscosity coefficient $\mu$ in the equation (3) described above caused by the gelatinization of silica, and
[2] disturbance of settling based on the charge repulsion of silica particles deposited.

Countermeasures against the factors [1] and [2] described above based on the investigation results obtained by the present inventors shall be explained below.

[1] Countermeasure against an increase in the viscosity coefficient $\mu$ in the equation (3) described above caused by the gelatinization of silica:

Silica is gelatinized because of the deposition of silica in the stale that the oversaturation degree of free silica in the sulfuric acid-acidified solution is large.

On the other hand, $Zn_2SiO_4$ which is a soluble silica compound contained in the crude material is readily eluted according to the following equation (4):

$$Zn_2SiO_4 + 2H_2SO_4 \rightarrow 2ZnSO_4 + Si(OH)_4 \text{ (aq)} \tag{4}$$

However, free silica has as low equilibrium concentration as about 100 ppm and therefore is precipitated according to the reaction of the following equation (5):

$$nSi(OH)_4 \text{ (aq)} \rightarrow (SiO_2)_n + 2nH_2O \tag{5}$$

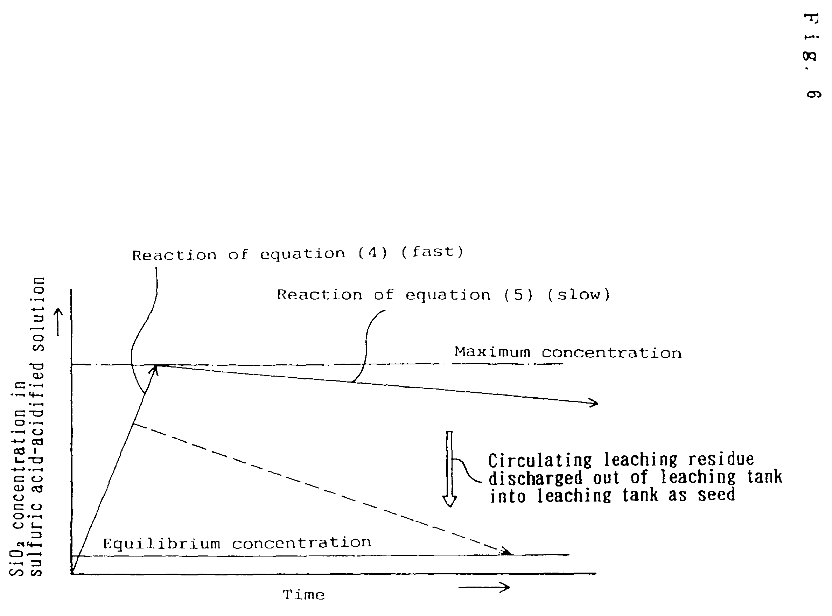

On the other hand, the reaction rate in the equation (4) described above is very fast almost regardless of the pH as shown in Fig. 6, but the reaction in the equation (5) is very slow when the pH is low.

This allows the oversaturation state of free silica to be present.

That is, if the reaction in the equation (5) can be accelerated, eluted silica shall quickly be deposited and precipitated, and the $SiO_2$ concentration shall be lowered.

It is effective for a countermeasure for accelerating the reaction in the equation (5) to elevate the pH and the temperature of the solution. However, such countermeasure can not be employed in an actual operation because (1) if the pH exceeds 3.0, $Zn_2SiO_4$ is not eluted and transferred into the leaching residue as a non-dissolved residue, so that the Zn extraction percentage is lowered, and (2) if the solution temperature is excessively elevated, a required energy increases, and therefore the profitability is lost.

From the consideration on the mechanisms of the dissolution of $Zn_2SiO_4$ which is a soluble silica compound as described above and the precipitation of silica, the present inventors have found that the reaction in the equation (5) can be accelerated and eluted silica can quickly be deposited and precipitated by feeding as a crystal nucleus (seed), such silica precipitated at an after step in the leaching tank as a sludge precipitated in a thickener which is an after step in the leaching tank into the leaching tank.

As a result thereof, the oversaturation degree of free silica is decreased in a low pH area, and the inhibition of gelatinization has become possible.

That is, according to the investigation results obtained by the present inventors, the silica concentration in the sulfuric acid-acidified solution contained in the leaching tank has to be maintained at 5 g/l or less as described above, and when the concentration exceeds this level, the gelatinization of silica is caused, and the settling property and the filtration characteristic of silica is degraded. However, the present invention in which silica is fed to the leaching tank as a seed has made it possible to lower the silica concentration even in an area of the high acid concentration (area of low pH) by adsorbing oversaturated dissolved silica to a seed, inhibit the gelatinization of soluble silica and enhance the settling property and the filtration characteristic of silica to a large extent.

That is, in the past, it was difficult to dissolve $Zn_2SiO_4$ in the case where the pH of the dissolving solution was higher than 3.0. Un the other land. $Zn_2SiO_4$ was soluble in the case of $pH \leqq 3.0$. However, the dissolved silica concentration was increased as the acid concentration grew, and a reduction in the settling property of silica and the solid-liquid separation characteristic was caused, so that it was difficult to achieve both of the dissolution of $Zn_2SiO_4$ and the separation of dissolved silica. However, the present invention has made it possible to reduce oversaturated dissolved silica and quickly precipitate silica in a form having an excellent solid-liquid separation characteristic without depending on the pH of the dissolving solution by feeding silica as a seed to the leaching tank.

That is, according to the present invention, when the zinc silicate-containing zinc crude material is dissolved in the sulfuric acid-acidified solution contained in the leaching tank to extract zinc, a composition containing silica is fed into the sulfuric acid-acidified solution contained in the leaching tank described above so that the amount of silica that is insoluble in acid contained in the above composition satisfies the following equation (1-1):

$$\alpha = \text{[amount of silica that is insoluble in acid contained in the composition}$$

$$\text{containing silica fed into}$$

$$\text{the above leaching tank]/[amount of soluble silica contained in the zinc}$$

$$\text{silicate-containing zinc crude material fed into the above leaching tank] (weight ratio)} \geqq 0.3 \qquad (1-1)$$

The amount of silica that is insoluble in acid contained in the composition containing silica fed into the leaching tank is more preferably an amount satisfying above $\alpha$ of 2 or less.

This is because when $\alpha$ exceeds 2, a feeding effect thereof is saturated, and an increase in energy such as an electric power required for a feeding pump at an after step in the leaching tank lowers the profitability.

In the present invention, a leaching residue produced at the hydrometallurgical zinc refining step is preferably used as the composition described above containing silica.

Further, in the present invention, silica contained in the dissolution residue produced at the after step in the leaching tank is more preferably fed as a seed into the leaching tank.

In this case, as shown in the examples described later, the leaching residue discharged out of the leaching tank is more preferably re-circulated and fed into the sulfuric acid-acidified solution contained in the leaching tank so that the amount of silica contained in the dissolution residue recirculated and fed satisfies the following equation (2-1):

$$\alpha = \text{[amount of silica that is insoluble in acid contained in the leaching}$$

$$\text{residue re-circulated and fed}$$

$$\text{into the leaching tank]/[amount of soluble silica contained in the zinc}$$

$$\text{silicate-containing zinc crude material fed into the leaching tank] (weight ratio)} \geqq 0.3 \qquad (2-1)$$

The re-circulating and feeding amount of the leaching residue is more preferably a re-circulating and feeding amount satisfying above $\alpha$ of 2 or less.

In the present invention, the pH of the sulfuric acid-acidified solution contained in the leaching tank is more preferably controlled to 3.0 or less, and the $H_2SO_4$ concentration is more preferably controlled to 100 g/l or less.

This is because when the pH of the sulfuric acid-acidified solution contained in the leaching tank exceeds 3.0, it is difficult to dissolve $Zn_2SiO_4$, and when the $H_2SO_4$ concentration exceeds 100 g/l, the dissolution accelerating effect is saturated, and the cost is increased.

[2] Countermeasure against the disturbance of settling based on the charge repulsion of silica particles deposited:

The gelatinization can be inhibited by decreasing the oversaturation degree of silica contained in the solution by feeding as a seed the leaching residue described above.

On the other hand, even when the deposited silica particles repulse each other by virtue of a charge and are not coagulated, the suspended silica particles are adsorbed to the seed, and the particle diameter $D_P$ of the solid particles in the equation (3) described above, that is, the particle diameter of silica becomes large, so that the sedimentation velocity is increased.

Further, for making it possible to quickly precipitate eluted silica in a solid-liquid separable form, it is effective to control the temperature of the sulfuric acid-acidified solution contained in the leaching tank to 60°C or higher and promote the coagulation of the silica particles.

That is, in the present invention, the temperature of the sulfuric acid-acidified solution contained in the leaching tank is preferably 60°C or higher, more preferably 60°C or higher up to the boiling point of the sulfuric acid-acidified solution at atmospheric pressure.

This is because the concentration of dissolved silica in the sulfuric acid-acidified solution is lowered as the liquid temperature increases and therefore it becomes possible to quickly precipitate silica in a form having an excellent solid-liquid separation characteristic.

The present invention has made it possible to dissolve and extract the zinc silicate-containing zinc crude material at 60°C or higher which is a processing temperature at an acid dissolution step and precipitate silica in a form having an excellent solid-liquid separation characteristic by re-circulating and feeding as a seed, the leaching residue discharged out of the leaching tank into the sulfuric acid-acidified solution contained in the leaching tank.

As described above, the present invention has made it possible to dissolve and extract whole zinc silicate only by one stage dissolution processing and quickly obtain the solution having a good solid-liquid separation characteristic.

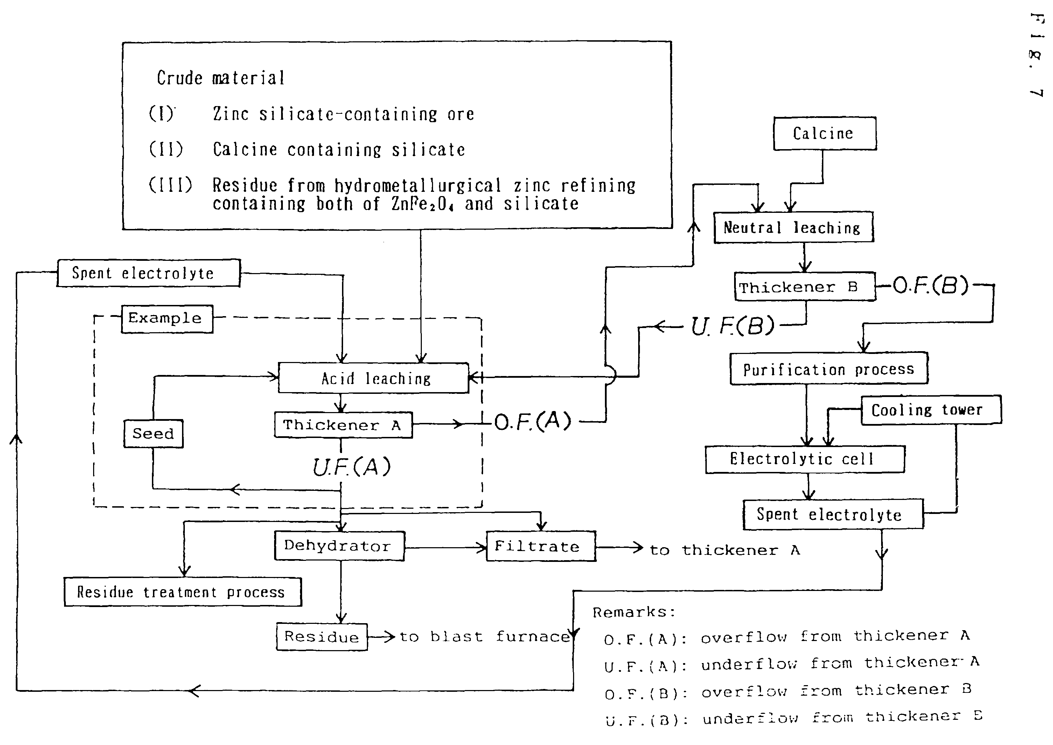

Next, one example of the hydrometallurgical zinc refining method according to the present invention shall be shown in Fig. 7 by a flow chart.

A crude material containing at least one of (I) a zinc silicate-containing ore, (II) a calcine containing silicate and (III) a residue containing both of $ZnFe_2O_4$ and silicate is dissolved in an acid leaching process and then fed into a thickener A.

An overflow [O.F. (A)] from the thickener A is fed into an electrolytic cell via a neutral leaching process, a thickener B and a purification process, and high purity Zn is produced in the electrolytic cell.

An underflow [U.F. (A)] from the thickener A is fed into a residue treatment process or a dehydrator, wherein a filtrate coming out of the dehydrator is circulated into the thickener A, and a residue produced in the dehydrator is fed into a blast furnace to recover zinc.

In the present invention, at least a part of the underflow [U.F. (A)] from the thickener A in Fig. 7 described above is re-circulated and fed as a seed into the acidic leaching process.

As leaching process, the present invention has made it possible to deposit and precipitate eluted silica in a solid-liquid separable form in a high acid concentration range (low pH range) at inexpensive facilities without providing a lot of the leaching tanks in dissolving the zinc silicate-containing zinc crude material such as the preceding crude material in hydrometallurgical zinc refining containing at least one of (I) a zinc silicate-containing ore, (II) calcine containing silicate and (III) a residue containing both of $ZnFe_2O_4$ and silicate in the leaching tank filled with the sulfuric acid-acidified solution to extract zinc. As a result thereof, the present invention has made it possible as well to prevent a reduction in a current efficiency caused by impurities contained in the electrolytic cell at the hydrometallurgical zinc refining step.

EXAMPLES

The present invention shall specifically be explained below in order of (1) the first invention. (2) the second invention and (3) the third invention with reference to examples and comparative examples.

Analysis and measurements were made, by the methods given below, of both the examples and the comparative examples with respect to (1) the $SiO_2$ concentration in a sulfuric acid-acidified solution, (2) the contents of silica in silica-containing sources fed (added) (also referred to hereunder as seeds) (3) sedimentation velocity associated closely with solid-liquid separation characteristics of solutions (slurries), and (4) filtration rate.

[SiO$_2$ concentration in sulfuric acid-acidified solution]

By the SiO$_2$ concentration is meant by the total of a SiO$_2$ concentration of ionic silica [Si(OH)$_4$] in that solution and a SiO$_2$ concentration of colloidal silica [(SiO$_2$)$_n$] in that solution. This total concentration, however, excludes a concentration of silica arising from insoluble silica present in particular quartz.

To be more specific, the total concentration of SiO$_2$ is regarded as equivalent to the content of SiO$_2$ reduced from that of Si which is obtained through analysis of ICP (inductively coupled plasma atomic emission spectrometry) of a specimen solution that has been obtained by filtration with use of a JIS filter paper of 5 class C (1 μm), followed by dissolution of the filtrate in hydrofluoric acid.

[Amount of silica present in fed (added) silica-containing source (seed)]

Analysis were made, by the following methods, as regards the amounts of silica present in leaching residues (seeds) incorporated in a zinc sulfate solution (Example 4 and Example 5), and the amounts of SiO$_2$ present in thickner settled sludges (thickner underflows) re-circulated and fed into a first leaching tank (Example 6, Example 7 and Comparative Example 4).

Namely, a specimen in a hydrochloric acid-acidified solution of hydrochloric acid/nitric acid of 2/1 (in a volume ratio) was evaporated dry and then dewatered with heat, followed by dissolution of a soluble salt will addition of hydrochloric acid and by subsequent filtration of the resulting solution.

The settlement (residue) thus made obtainable was vigorously heated to measure its weight (A), after which silicic dioxide was evaporated off by the addition of hydrofluoric acid.

The resultant specimen was again subjected to vigorous heating to thereby measure its weight (B), and the amount of silicic dioxide (the amount of SiO$_2$ that was insoluble in acid) was counted from a decrease between the two different weights (A - B).

[Sedimentation velocity]

The sedimentation velocity was defined by the absolute value of the gradient of a straight line obtained by plotting the height of a clear solution-slurry interface to time, wherein the suspension was decanted to measure the height of the clear solution-slurry interface (supernatant liquid face) every one minute.

[Filtration rate (= evaluation barometer for filtration characteristic)]

A slurry was poured into a funnel having a standard qualitative filter paper (No. 2. 185 mm) put thereon and aspirated by means of a vacuum pump (exhaust velocity: 50 l/min. vacuum degree: 6. 7×10$^{-2}$ Pa) to determine the filtration rate.

In the following examples, a silica source containing fed (added) silica is referred to as a seed.

[First invention]

Comparative Example 1

A calcine (Zn: 63.7 wt %, SiO$_2$: 6.8 wt %) was added to a zinc sulfate solution controlled in advance to pH of 1.0 so that the addition amount of a calcine in the solution became 100 g/l, and a spent electrolyte waste solution (Zn: 57 g/l, H$_2$SO$_4$: 198 g/l SiO$_2$: 0.13 g/l) from the hydrometallurgical zinc refining step was added to maintain the pH of the solution at 1.0, followed by continuing the processing at a solution temperature of 90°C for 8 hours.

The SiO$_2$ concentration of the sulfuric acid-acidified solution was 2.5 g/l.

After finishing the processing of 8 hours, the sedimentation velocity and the filtration rate were determined as the solid-liquid separation characteristics of the slurry.

Comparative Example 2

The calcine was added to a zinc sulfate solution controlled in advance to a pH of 2.2 so that the addition amount of a calcine in the solution became 100 g/l as was the case with Comparative Example 1, and the spent electrolyte was added to maintain the pH at 2.2, followed by continuing the processing at a solution temperature of 70 °C for 8 hours.

The SiO$_2$ concentration of the sulfuric acid-acidified solution was 1.8 g/l.

After finishing the processing of 8 hours, the sedimentation velocity and the filtration rate were determined as the solid-liquid separation characteristics of the slurry.

Comparative Example 3

The calcine was added to a zinc sulfate solution controlled in advance to pH of 2.2 so that the $SiO_2$ concentration of the sulfuric acid-acidified solution became 6.2 g/l as was the case with Comparative Example 1, and the spent electrolyte was added to maintain the pH at 2.2, followed by continuing the processing at a solution temperature of 90 °C of 8 hours.

After finishing the processing for 8 hours, the sedimentation velocity and the filtration rate were determined as the solid-liquid separation characteristics of the slurry.

Example 1

The calcine (Zn: 63.7 wt %, $SiO_2$: 6.8 wt %) was added to the zinc sulfate solution controlled in advance to pH of 2.2 so that the addition amount of the calcine in the solution became 100 g/l as was the case with Comparative Example 1, and a spent electrolyte (Zn: 55 g/l, $H_2SO_4$: 190 g/l $SiO_2$: 0.12 g/l) was added to maintain the pH at 2.2, followed by continuing the processing at a solution temperature of 90°C for 4 hours.

The $SiO_2$ concentration of the sulfuric acid-acidified solution was 1.3 g/l.

After finishing the processing of 4 hours, the sedimentation velocity and the filtration rate were determined as the solid-liquid separation characteristics of the slurry.

The above four examples are batch tests.

Example 2

A continuous test was carried out based on the results of the batch tests described above.

That is, a spent electrolyte (Zn: 58 g/l, $H_2SO_4$: 199 g/l, $SiO_2$: 0.13 g/l) was fed into a serial continuous type leaching tank (5 l/tank $\times$ 2 tanks) at an addition rate of 2.5 l/hr, wherein the calcine (Zn: 63.7 wt %, $SiO_2$: 6.8 wt %) was added to the first tank at an addition rate of 800 to 1200 (g/l/hr) so that a pH of 2.2 was maintained, and the spent electrolyte was added to the second tank so that a pH of 2.2 could be maintained to carry out continuous processing at a residence time of 4 hours.

The $SiO_2$ concentration of the sulfuric acid-acidified solution was 820 mg/l.

The sedimentation velocity and the filtration rate were determined as the solid-liquid separation characteristics of an overflow solution from the final tank.

Example 3

As the continuous test, a spent electrolyte (Zn: 55 g/l, $H_2SO_4$: 195 g/l, $SiO_2$: 0.13 g/l) was fed into a serial continuous type teaching tank (5 l/tank $\times$ 4 tanks) at an addition rate of 5.0 l/hr to carry out continuous processing at a residence time of 4 hours.

The calcine (Zn: 63.7 wt %, $SiO_2$: 6.8 wt %) was added to the first tank at an addition rate of 800 to 1200 (g/l/hr) so that a pH of 2.2 was maintained, and the spent electrolyte was added to the second tank and the following tanks so that a pH of 2.2 could be maintained.

The $SiO_2$ concentration of the sulfuric acid-acidified solution was 580 mg/l.

The sedimentation velocity and the filtration rate were determined as the solid-liquid separation characteristics of an overflow solution from the final tank.

The test conditions and the solid-liquid separation characteristics in six examples of the examples and comparative examples described above are shown all together in Table 2.

Table 2

In Comparative Examples 1 to 3, any of the pH, the temperatures and the $SiO_2$ concentrations of the sulfuric acid-acidified solutions does not meet the conditions according to the present invention, and in all cases, the solid-liquid separation characteristics shown by the sedimentation velocity and the filtration rate are very inferior.

Example 1 is a batch test, and Examples 2 and 3 are continuous tests in which 2 tanks and 4 tanks each are disposed in series, and the pH, the temperatures and the $SiO_2$ concentrations of the sulfuric acid-acidified solutions meet the conditions according to the present invention. The solid-liquid separation characteristics are good as well in any case of the batch test and the continuous tests.

[Second and third invention]

Example 4

The following batch test was carried out in order to investigate the addition effect of silica.
That is, a zinc silicate-containing zinc ore was added to a zinc sulfate solution which was adjusted in advance to a pH of 1.5 to carry out dissolution and extraction processings for 4 hours in the following conditions.
A spent electrolyte from the hydrometallurgical zinc refining step was added in order to keep the pH constant.

[Dissolution and extraction processing conditions]

(1) pH of the zinc sulfate solution in experiment: kept constant at 1.5
(2) temperature of the zinc sulfate solution in experiment: 70°C
(3) addition amount of the zinc silicate-containing zinc ore: 50 g/l
(4) grade of the zinc silicate-containing zinc ore: $SiO_2$ = 14.2 wt %
(5) seed: acidic leaching residue having an $SiO_2$ content of 20 wt % obtained at a pH of 1.5
(6) composition of the spent electrolyte added: Zn = 57 g/l, $H_2SO_4$: 190 g/l, $SiO_2$: 0.13 g/l

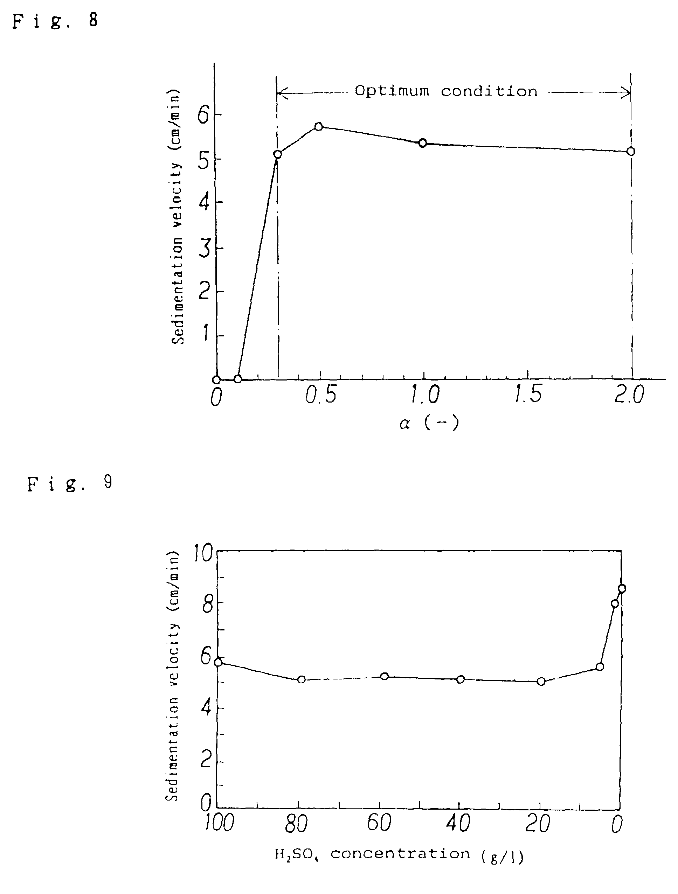

Shown in Fig. 8 is the relation of the sedimentation velocity (evaluation barometer for the settling property of silica) of the slurry with the addition amount of tlie seed.
In Fig. 8, $\alpha$ on an axis of abscissa shows a value represented by the following equation (2-2):

$$\alpha = [\text{amount of silica that is insoluble in acid contained in the leaching}$$

$$\text{residue (seed) added to the zinc}$$

$$\text{sulfate solution]/[amount of soluble silica contained in the zinc silicate-containing}$$

$$\text{zinc ore added to the zinc sulfate solution] (weight ratio)} \qquad (2\text{-}2)$$

As shown in Fig. 8, it has been found that according to the present invention, if $\alpha$ defined by the equation (2-2) described above is 0.3 or more, the sedimentataion velocity markedly increases, and silica eluted from the zinc silicate-containing zinc ore settles down very quickly by adding the seed.

Example 5

The following batch test was carried out in order to investigate an influence exerted to the sedimentation velocity, (settling rate) by the acid concentration of the sulfuric acid-acidified solution in the condition of adding silica in dissolving and extracting a zinc silicate-containing zinc ore.
That is, the zinc silicate-containing zinc ore was added to a zinc sulfate solution which was adjusted in advance to a predetermined pH (acid concentration) to carry out dissolution and extraction processings for 4 hours in the following conditions.
A spent electrolyte from the hydrometallurgical zinc refining step was added in order to maintain the pH at a predetermined constant value.

[Dissolution and extraction processing conditions]

(1) pH (acid concentration) of the zinc sulfate solution in experiment: kept at a predetermined value
(2) temperature of the zinc sulfate solution in experiment: 70°C
(3) addition amount of the zinc silicate-containing zinc ore: 100 g/l
(4) grade of the zinc silicate-containing zinc ore: $SiO_2$ = 6.8 wt %
(5) seed: acidic leaching residue having an $SiO_2$ content of 20 wt %
(6) seed addition amount: seed addition amount satisfying $\alpha$ = 2

(7) composition of the spent electrolyte added: Zn = 57 g/l, $H_2SO_4$: 190 g/l, $SiO_2$: 0.13 g/l

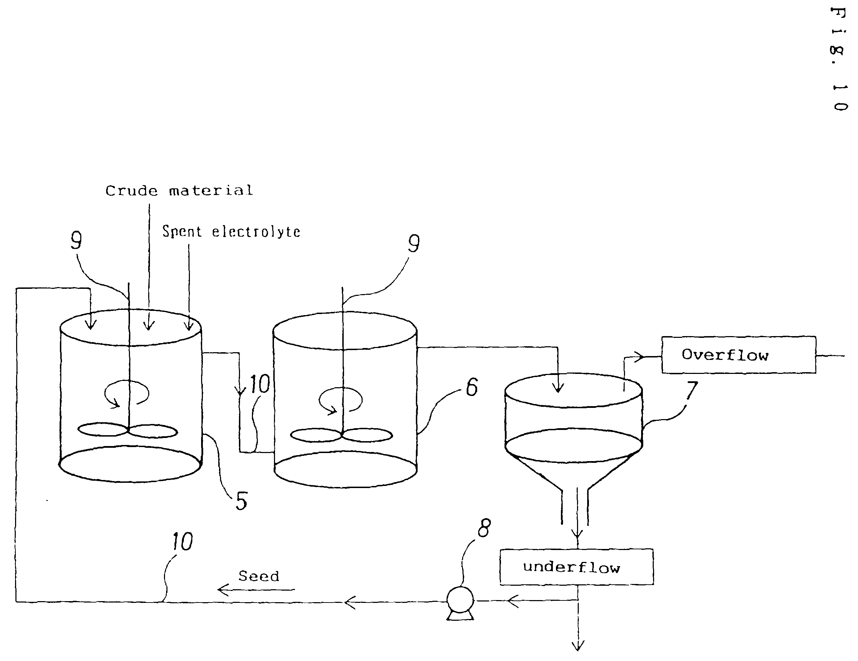

Shown in Fig. 9 is the relation of the sulfuric acid concentration of the sulfuric acid-acidified solution with the sedimentation velocity (evaluation barometer for the settling property of silica) of the slurry.

As shown in Fig. 9, it has been found that according to the present invention, silica eluted from the zinc silicate-containing zinc ore settles down very quickly in a range of the high acid concentration, that is, the low pH. Example 6, Example 7 and Comparative Example 4.

Experiments according to a continuous process were carried out based on the results of the batch tests described above.

The experimental apparatus and the experimental method are shown in Fig. 10.

In Fig. 10, 5 represents the first leaching, tank having a content volume of 5 l; 6 represents as well the second leaching tank having a content volume of 5 1; 7 represents a thickener; 8 represents a pump; 9 represents a stirrer; and 10 represents a pipe line.

That is, the series continuous type leaching tank was filled with a spent electrolyte from electrolytic cells, and then a calcine was fed to carry out dissolution and extraction processings in the conditions shown in Table 3.

While carrying out the dissolution and extraction processings described above, an overflow solution from the second leaching tank was sampled to determine the sedimentation velocity and the filtration rate as the solid-liquid separation characteristics of the overflow solution.

In Example 6 and Example 7, 40 % of a thickener precipitated residue (thickener underflow) was re-circulated and fed as a seed into the first leaching tank, and in Comparative Example 4, the thickener precipitated residue was not re-circulated and fed into the leaching tank.

The experimental results are shown in Table 3 together with the experimental conditions.

In Table 3, $\alpha$ shows a value represented by the following equation (2-3) :

$$\alpha = \text{[amount of SiO}_2 \text{ that is insoluble in acid contained in the thickener}$$

$$\text{precipitated residue}$$

$$\text{(thickener underflow) re-circulated and fed into the first leaching}$$

$$\text{tank]/[amount of soluble silica contained in the calcined zinc ore fed to the}$$

$$\text{first leaching tank] (weight ratio)} \tag{2-3}$$

As shown in Table 3, the present invention has made it possible to reduce the $SiO_2$ concentration of the sulfuric acid-acidified solution contained in the leaching tank and has made it possible as well to inhibit the gelatinization of soluble silica and notably increase the settling rate of eluted silica. Further, the solid-liquid separation characteristic of the precipitate is very excellent.

Table 3

The methods for processing the zinc silicate-containing zinc crude material according to the first invention to the third invention described above have made it possible to achieve the excellent zinc extraction rate and obtain the solution having good settling characteristic and filtering characteristic and excellent solid-liquid separation characteristics.

Comparing present invention with a conventional technique of Japanese Unexamined Patent Publication No. 50-44917 having the most excellent solid-liquid separation characteristics among the prior arts, in the case of continuous processing, the conventional technique inevitably requires a lot of leaching tanks and a processing time of 5 hours or longer for growing crystals in the case of continuous processing since acid is added progressively from a high pH level to lower the pH. Further, a strong stirrer or a lot of a repulp solution is required since the leaching tank of the first stage is increased in a pulp concentration.

In contrast with this, since processing while maintaining the pH at a constant value is possible, the present invention has made it possible to carry out the processing sufficiently well with only one leaching tank without necessitating large scale facilities such as a lot of leaching tanks and refine zinc using a zinc silicate-containing zinc crude material at simple facilities.

Further, the present invention has made it unnecessary to employ a high power stirrer or a lot of a diluting repulp solution which is necessitated in the preceding conventional methods in which sulfuric acid is added progressively to reduce pH.

In addition, the present invention can shorten the processing time.

As shown in Examples 2 and 3, a lot of the leaching tanks may he disposed in series in order to further enhance the processing capacity.

Further, conventional techniques other than Japanese Unexamined Patent Publication No. 50-44917 have had the problems that the inferior solid-liquid separation characteristics of the solutions require an increase in the capacity of a thickener or a filter press which is an after step and therefore a lot of investment to the facilities is required and that when solid-liquid separation is insufficient in the thickener or a lot of $SiO_2$ is present in the solution, a residue flows into a purification stage, and the impurities are dissolved again, which results in increasing an impurity concentration in an electrolytic solution and therefore reducing an electric efficiency in electrolysis to a large extent.

In contrast with this, since the solution having good solid-liquid separation characteristics can be obtained according to the present invention, investment to the facilities is small and the electric efficiency in electrolysis is not reduced at the electrolytic cells as compared with those of conventional methods.

The present invention provides the following excellent effects:

(1) It becomes possible to quickly precipitate eluted silica in a form having excellent solid-liquid separation characteristics, and therefore the problem of a reduction in an electric efficiency in an electrolytic cell can be solved.

(2) It is possible to carry out both of the dissolution and extraction of a zinc silicate-containing zinc crude material and the separation of silica at the same time in the same condition of the acid concentration (pH) of the dissolving solutions, and therefore the steps and the facilities are very simple.

(3) A solid-liquid separator of a high capacity such as a thickener and a filter press is not required, and therefore the facilities are of a small scale and simplified.

(4) In contrast with conventional methods in which a calcine, $CaCO_3$ or $Ca(OH)_2$ is used as a neutralizing agent after dissolving a crude material in a strong acidic dissolving solution to elevate the pH, the present invention is not required to use a neutralizing agent and therefore does not have the problems of a reduction in a zinc recovery and an increase in a residue amount.

(5) The separation of silica has become possible in a range of a high acid concentration (low pH range), and therefore the present invention can be applied as well to (1) a ultra-high temperature and strong acidic leaching step, (2) a high temperature and strong acidic leaching step and (3) a preliminary neutralizing step at the residue processing step of the hydrometallurgical zinc processing step and has made it possible to recover Zn from various zinc silicate-containing zinc crude materials.

That is, it has become possible to recover Zn as well from a residue at the hydrometallurgical zinc refining step containing both of $ZnFe_2O_4$ which can not be dissolved and extracted without using a sulfuric acid solution of a high concentration and silicate compound.

Table 1

| pH | Liquid temperature | $SiO_2$ concentration | Settling property and filtering characteristic |
|---|---|---|---|
| 1.5≦pH≦3.0 | 75 °C or higher | small (5.0g/l or less) | ○ |
| 1.5≦pH≦3.0 | lower than 75 °C | small (5.0g/l or less) | × |
| 1.5≦pH≦3.0 | 75 °C or higher | large (exceeding 5.0g/l) | × |
| pH<1.5 | 75 °C or higher | small (5.0g/l or less) | × |
| Remark: unsuitable conditions are underlined | | | |

Table 2

| No. | Distinction of Comparative Example and Example | Sulfuric acid-acidified solution | | | Residence time (hr) | Amount of calcine (g/l) | Solid-liquid separation characteristic | | Test method |
|---|---|---|---|---|---|---|---|---|---|
| | | Temperature (°C) | pH | SiO$_2$ concentration (g/l) | | | Sedimentation velocity (cm/min) | Filtration rate (ml/min/cm$^2$) | |
| 1 | Comparative Example 1 | 9 0 | 1.0 | 2.5 | 8 | 100 | 0 | 0 | batch |
| 2 | Comparative Example 2 | 7 0 | 2.2 | 1.8 | 8 | 100 | 0 | 0 | |
| 3 | Comparative Example 3 | 9 0 | 2.2 | 6.2 | 8 | 100 | 0 | 0 | |
| 4 | Example 1 | 9 0 | 2.2 | 1.3 | 4 | 100 | 12.0 | 0.6 | |
| 5 | Example 2 | 9 0 | 2.2 | 0.82 | 4 | 800~1200 | 15.9 | 1.2 | continuous |
| 6 | Example 3 | 9 0 | 2.2 | 0.58 | 4 | 800~1200 | 21.1 | 1.2 | |

EP 0 851 034 B1

Table 3

| | | | Example 6 | Example 7 | Comparative Example 4 |
|---|---|---|---|---|---|
| Experimental conditions | pH of solution in leaching tank ( − ) | | 1. 5 | 1. 5 | 1. 5 |
| | Solution temperature in leaching tank (℃) | | 9 0 | 7 0 | 9 0 |
| | Residence time of solution in leaching tank (hr/2tanks) | | 4 | 4 | 4 |
| | Feed amount of spent electrolyte [1/(hr・tank)] | | 2. 5 | 5. 0 | 2. 5 |
| | Composition of spent electrolyte | Zn (g/1) | 5 8 | 5 5 | 5 8 |
| | | $H_2SO_4$ (g/1) | 1 9 9 | 1 9 5 | 1 9 9 |
| | | $SiO_2$ (g/1) | 0. 1 3 | 0. 1 3 | 0. 1 3 |
| | Feed amount of calcine (g/hr) | | 800~1200 | 800~1200 | 800~1200 |
| | Chemical analysis of calcine | Zn (wt%) | 6 3. 7 | 6 3. 7 | 6 3. 7 |
| | | $SiO_2$ (wt%) | 6. 8 | 6. 8 | 6. 8 |
| | Circulating and feeding amount of seed (%) (thickener under flow) | | 4 0 | 4 0 | 0 |
| | Content of dissolution residue on seed (g/1) (thickener under flow) | | 3 6 | 4 2 | − |
| | $SiO_2$ amount in seed (g/1) (thickener settled sludge) | | 7. 2 | 8. 4 | − |
| | $\alpha$ (−) | | 0. 4 8 | 0. 4 8 | 0 |
| Experimental results | $SiO_2$ concentration in leaching tank (g/1) | | 1. 3 8 | 1. 9 8 | 6. 2 8 |
| | Sedimentation velocity (cm/min) | | 5. 1 | 5. 7 | 0. 0 |
| | Filtration rate (ml/min/cm³) | | 0. 7 | 0. 9 | 0. 0 |

**Claims**

1.  A method for processing a zinc silicate-containing zinc crude material, characterized by maintaining a sulfuric acid-acidified solution in the following conditions in extracting zinc from a zinc silicate-containing zinc crude material in a sulfuric acid-acidified leaching tank:
    liquid temperature (t) : t $\geqq$ 75°C
    pH        : 1.5 $\leqq$ pH $\leqq$ 3.0
    SiO$_2$ concentration, being concentration of ionic silica [Si(OH)$_4$] and of colloidal silica [(SiO$_2$)$_n$] in that solution :
    SiO$_2$ $\leqq$ 5.0 g/l

2.  The method for processing a zinc silicate-containing zinc crude material as described in claim 1, wherein the pH of said sulfuric acid-acidified solution is maintained at a constant value falling in a range of 1.5 or higher and 3.0 or lower.

3.  The method for processing a zinc silicate-containing zinc crude material as described in claim 1 or 2, wherein said zinc silicate-containing zinc crude material has a residence time of 3 hours or longer in said leaching tank.

4.  A method for processing a zinc silicate-containing zinc crude material, characterized by feeding a composition containing silica into a sulfuric acid-acidified solution contained in a sulfuric acid-acidified leaching tank so that the amount of silica that is insoluble in acid contained in said composition satisfies the following equation (1) in extracting zinc from the zinc silicate-containing zinc crude material in said leaching tank:

    [amount of silica that is insoluble in acid contained in the composition containing silica fed into said

    leaching tank]/[amount of soluble silica contained in the zinc silicate-

    containing zinc crude material fed into said leaching tank] (weight ratio) $\geqq$ 0.3            (1)

5.  The method for processing a zinc silicate containing zinc crude material as described in claim 4, wherein said composition containing silica is a leaching residue produced at a hydrometallurgical zinc refining step.

6.  A method for processing a zinc silicate-containing zinc crude material, characterized by re-circulating and feeding a leaching residue discharged out of a sulfuric acid-acidified leaching tank into a sulfuric acid-acidified solution contained in said leaching tank so that the amount of silica that is insoluble in acid contained in the leaching residue re-circulated and fed satisfies the following equation (2) in extracting zinc from the zinc silicate-containing zinc crude material in said leaching tank:

    [amount of silica that is insoluble in acid contained in the leaching residue re-circulated and fed into

    said leaching tank]/[amount of soluble silica contained in the zinc silicate-

    containing zinc crude material fed into said leaching tank] (weight ratio) $\geqq$ 0.3            (2)

7.  The method for processing a zinc silicate-containing zinc crude material as described in any of claims 4 to 6, wherein the pH of the sulfuric acid-acidified solution contained in said leaching tank is controlled to 3.0 or lower, and the concentration of sulfuric acid is controlled to 100 g/l or less.

8.  The method for processing a zinc silicate-containing zinc crude material as described in any of claims 4 to 7, wherein the temperature of the sulfuric acid-acidified solution contained in said leaching tank is controlled to 60°C or higher.

**Patentansprüche**

1. Verfahren zum Behandeln eines zinksilicathaltigen Zinkrohmaterials, dadurch gekennzeichnet, dass man beim Extrahieren von Zink aus einem zinksilicathaltigen Zinkrohmaterial in einem mit Schwefelsäure beschickten Auslaugtank eine schwefelsaure Lösung unter folgenden Bedingungen hält:

    Flüssigkeitstemperatur (t): $t \geq 75\ °C$

    pH-Wert: $1{,}5 \leq pH\text{-Wert} \leq 3{,}0$

    $SiO_2$-Konzentration, bei der es sich um die Konzentration von ionischem Siliciumdioxid $[Si(OH)_4]$ und von kolloidalem Siliciumdioxid $[(SiO_2)_n]$ in der betreffenden Lösung handelt: $SiO_2 \leq 5{,}0\ g/l$.

2. Verfahren zum Behandeln eines zinksilicathaltigen Zinkrohmaterials nach Anspruch 1, wobei der pH-Wert der schwefelsauren Lösung auf einem konstanten Wert innerhalb eines Bereichs von 1,5 oder höher und 3,0 oder niedriger gehalten wird.

3. Verfahren zum Behandeln eines zinksilicathaltigen Zinkrohmaterials nach Anspruch 1 oder 2, wobei die Aufenthaltsdauer des zinksilicathaltigen Zinkrohmaterials in dem Auslaugtank 3 h oder mehr beträgt.

4. Verfahren zum Behandeln eines zinksilicathaltigen Zinkrohmaterials, dadurch gekennzeichnet, dass man beim Auslaugen von Zink aus dem zinksilicathaltigen Zinkrohmaterial in einem Auslaugtank einer schwefelsauren Lösung in dem mit Schwefelsäure beschickten Auslaugtank eine siliciumdioxidhaltige Zusammensetzung in einer solchen Menge zuführt, dass die Menge des in der betreffenden Masse enthaltenen und säureunlöslichen Siliciumdioxids der folgenden Gleichung (1) genügt:

$$[\text{Menge an säureunlöslichem Siliciumdioxid in der dem}$$
$$\text{Auslaugtank zugeführten siliciumdioxidhaltigen Zusam-}$$
$$\text{mensetzung}]/[\text{Menge an löslichem Siliciumdioxid in dem}$$
$$\text{dem Auslaugtank zugeführten zinksilicathaltigen Zink-}$$
$$\text{rohmaterial] (Gewichtsverhältnis)} \geq 0{,}3 \tag{1}$$

5. Verfahren zum Behandeln eines zinksilicathaltigen Zinkrohmaterials, wobei die siliciumdioxidhaltige Zusammensetzung aus einem bei einer hydrometallurgischen Zinkvergütung bzw. -feinung angefallenen Auslaugrückstand besteht.

6. Verfahren zum Behandeln eines zinksilicathaltigen Zinkrohmaterials, dadurch gekennzeichnet, dass man bei der Extraktion von Zink aus dem zinksilicathaltigen Zinkrohmaterial in einem Auslaugtank einen aus dem mit Schwefelsäure beschickten Auslaugtank ausgetragenen Auslaugrückstand in einer solchen Menge in die in den Auslaugtank enthaltene schwefelsaure Lösung rückführt und einspeist, dass die Menge an in dem rückgeführten und eingespeisten Auslaugrückstand enthaltenem, säureunlöslichem Siliciumdioxid der folgenden Gleichung genügt:

$$[\text{Menge an säureunlöslichem Siliciumdioxid in dem in}$$
$$\text{den Auslaugtank rückgeführten und eingespeisten Aus-}$$
$$\text{laugrückstand}]/[\text{Menge an löslichem Siliciumdioxid in}$$
$$\text{dem dem Auslaugtank zugeführten zinksilicathaltigen}$$
$$\text{Zinkrohmaterial] (Gewichtsverhältnis)} \geq 0{,}3 \tag{2}$$

7. Verfahren zum Behandeln eines zinksilicathaltigen Zinkrohmaterials nach einem der Ansprüche 4 bis 6, wobei der pH-Wert der in dem Auslaugtank enthaltenen schwefelsauren Lösung auf 3,0 oder niedriger eingestellt und die Konzentration der Schwefelsäure bei 100 g/l oder weniger gehalten werden.

8. Verfahren zum Behandeln eines zinksilicathaltigen Zinkrohmaterials nach einem der Ansprüche 4 bis 7, wobei die Temperatur der in dem Auslaugtank enthaltenen schwefelsauren Lösung bei 60 °C oder darüber gehalten wird.

**Revendications**

1. Procédé pour traiter un matériau de zinc brut contenant du silicate de zinc, caractérisé par le maintien d'une solution acidifiée par de l'acide sulfurique dans les conditions suivantes lors de l'extraction du zinc à partir d'un matériau de zinc brut contenant du silicate de zinc dans un bac de lessivage acidifié par de l'acide sulfurique :

    température du liquide (t) : $t \geq 75$ °C

    pH : $1,5 \leq pH \leq 3,0$

    la concentration de $SiO_2$, qui est la concentration de silice ionique $[Si(OH)_4]$ et de silice colloïdale $[(SiO_2)_n]$ dans cette solution : $SiO_2 \leq 5,0$ g/$\ell$.

2. Procédé pour traiter un matériau de zinc brut contenant du silicate de zinc selon la revendication 1, dans lequel le pH de ladite solution acidifiée par de l'acide sulfurique est maintenue à une valeur constante tombant dans la gamme de 1,5 ou plus et de 3,0 ou moins.

3. Procédé pour traiter un matériau de zinc brut contenant du silicate de zinc selon la revendication 1 ou 2, dans lequel ledit matériau de zinc brut contenant du silicate de zinc a un temps de séjour de 3 h ou plus dans ledit bac de lessivage.

4. Procédé pour traiter un matériau de zinc brut contenant du silicate de zinc, caractérisé par l'introduction d'une composition contenant de la silice dans une solution acidifiée par de l'acide sulfurique contenue dans un bac de lessivage acidifié par de l'acide sulfurique de sorte que la quantité de silice qui est insoluble dans l'acide contenue dans ladite composition satisfait à l'équation (1) suivante lors de l'extraction du zinc à partir du matériau de zinc brut contenant du silicate de zinc dans ledit bac de lessivage :

$$[\text{quantité de silice qui est insoluble dans l'acide}$$
$$\text{contenue dans la composition contenant de la silice}$$
$$\text{introduite dans ledit bac de lessivage}]/[\text{quantité de}$$
$$\text{silice soluble contenue dans le matériau de zinc brut}$$
$$\text{contenant du silicate de zinc introduit dans ledit bac}$$
$$\text{de lessivage] (rapport pondéral)} \leq 0,3 \qquad (1)$$

5. Procédé pour traiter un matériau de zinc brut contenant du silicate de zinc selon la revendication 4, dans lequel ladite composition contenant de la silice est un résidu de lessivage produit à une étape de raffinage de zinc hydrométallurgique.

6. Procédé pour traiter un matériau de zinc brut contenant du silicate de zinc, caractérisé par la recirculation et l'introduction d'un résidu de lessivage rejeté d'un bac de lessivage acidifié par de l'acide sulfurique jusque dans une solution acidifiée par de l'acide sulfurique contenue dans ledit bac de lessivage de sorte que la quantité de silice qui est insoluble dans l'acide contenue dans le résidu de lessivage recirculé et introduit satisfait à l'équation (2) suivante lors de l'extraction du zinc à partir du matériau de zinc brut contenant du silicate de zinc dans ledit bac de lessivage :

$$[\text{quantité de silice qui est insoluble dans l'acide}$$
$$\text{contenue dans le résidu de lessivage recirculé et}$$
$$\text{introduit dans ledit bac de lessivage}]/[\text{quantité de}$$

silice soluble contenue dans le matériau de zinc brut contenant du silicate de zinc introduit dans ledit bac

de lessivage] (rapport pondéral) ≤ 0,3         (2)

7. Procédé pour traiter un matériau de zinc brut contenant du silicate de zinc selon l'une quelconque des revendications 4 à 6, dans lequel le pH de la solution acidifiée par de l'acide sulfurique contenue dans ledit bac de lessivage est réglé à 3,0 ou moins, et la concentration d'acide sulfurique est réglée à 100 g/l ou moins.

8. Procédé pour traiter un matériau de zinc brut contenant du silicate de zinc selon l'une quelconque des revendications 4 à 7, dans lequel la température de la solution acidifiée par de l'acide sulfurique contenue dans ledit bac de lessivage est réglée à 60 °C ou plus.

## Fig. 1

Sulfuric acid

Zinc silicate-containing zinc crude material

leaching tank

thickener

pH:about 5.0·· pH:about 3.0·· acid concentration
1.5~15g/l

Fig. 2

Fig. 3

Fig. 4

Zn extraction percentage : 93~95

(Zn$_2$SiO$_4$: dissolved)

settling property, filtration characteristic : good

Zn extraction percentage : about 80 %

(Zn$_2$SiO$_4$: undissolved)

settling property, filtration characteristic : good

Zn extraction percentage : 93~95

(Zn$_2$SiO$_4$: dissolved)

settling property, filtration characteristic :

poor

1.5  3.0

→ pH

23

Fig. 5

Fig. 6

Fig. 7

EP 0 851 034 B1

Crude material

(I)    Zinc silicate-containing ore

(II)   Calcine containing silicate

(III)  Residue from hydrometallurgical zinc refining containing both of $ZnFe_2O_4$ and silicate

Calcine

Neutral leaching

Thickener B —O.F.(B)—

Spent electrolyte

Example

←U.F.(B)

Acid leaching

Purification process

Seed

Thickener A → O.F.(A)

Cooling tower

U.F.(A)

Electrolytic cell

Spent electrolyte

Dehydrator → Filtrate → to thickener A

Residue treatment process

Residue → to blast furnace

Remarks:

O.F.(A): overflow from thickener A

U.F.(A): underflow from thickener A

O.F.(B): overflow from thickener B

U.F.(B): underflow from thickener B

Fig. 8

Fig. 9

Fig. 10